# EUROPÄISCHE PATENTSCHRIFT

(11) **EP 3 957 473 B1**
(45) Veröffentlichungstag und Bekanntmachung des Hinweises auf die Patenterteilung: **08.02.2023**
(21) Anmeldenummer: 20191663.2
(22) Anmeldetag: 19.08.2020
(51) Int. Cl.: B32B 5/20, B29C 70/46, B29C 70/18, B29C 70/02, B29C 43/20, B29C 43/18, B29C 43/14, B29C 43/02, B29C 44/16, B29C 44/14, B29C 44/06, B29C 44/04, B32B 5/24, B29C 44/42

(54) **VERFAHREN ZUM HERSTELLEN EINES FAHRZEUG-VERBUNDBAUTEILS**
METHOD FOR PRODUCING A VEHICLE COMPOSITE PROFILE
PROCÉDÉ DE FABRICATION D'UN COMPOSANT COMPOSITE DE VÉHICULE

(43) Veröffentlichungstag der Anmeldung: 23.02.2022
(73) Patentinhaber: Webasto SE, 82131 Stockdorf (DE)
(72) Erfinder: OBERMEIER, Tina, 82131 Stockdorf (DE); RASSELNBERG, Harald, 51373 Leverkusen (DE)
(74) Vertreter: Kilian Kilian & Partner

(56) Entgegenhaltungen:
- DE-A1-102010 014 398
- DE-A1-102014 224 463
- DE-A1-102015 005 504
- US-A- 5 076 880
- US-A1- 2001 001 687

## Beschreibung

Die Erfindung betrifft ein Verfahren zum Herstellen eines Fahrzeug-Verbundbauteils mit einem eine Kernschicht aufweisenden Schichtaufbau in einem Formwerkzeug, wobei die Kernschicht mit Bereichen unterschiedlicher Dicke gebildet wird.

Ein solches Fahrzeug-Verbundbauteil ist z. B. ein Außenflächenteil eines Dachmoduls oder ein Verkleidungsbauteil eines Fahrzeugs oder auch ein Deckel eines Dachöffnungssystems wie eines Schiebedaches oder eines Spoilerdaches, ein Dachelement z. B. eines Hardtop-Cabriolets oder ein Kofferraumladeboden.

Aus der DE 10 2012 013 538 B4 ist ein Fahrzeug-Sandwichelement bekannt geworden, das nach einem Verfahren hergestellt wird, bei dem schäumbares Material zwischen zwei Deckschichten injiziert wird. Die zwei Deckschichten werden mittels einer Haltevorrichtung in einem Werkzeug an gegenüberliegenden Werkzeugoberflächen im Abstand voneinander gehalten, so dass das schäumbare Material in einen Freiraum zwischen den zwei Deckschichten injiziert werden kann. Die Deckschichten, die vorzugsweise als trockene Faserhalbzeuge ausgebildet sind, sind somit an den Werkzeugoberflächen beim Schäumvorgang fixiert und verändern ihre Position nicht, während sie vom schäumbaren Material durchdrungen werden und dabei imprägniert und gleichzeitig fest mit dem geschäumten ausgehärteten Kern des Sandwichelements verbunden werden. Als Haltevorrichtungen werden Saugvorrichtungen, mit magnetischer Kraft wirkende Vorrichtungen, mechanische Haltevorrichtungen mit Haken oder dergleichen oder Adhäsionsmittel vorgeschlagen.

Die DE 10 2020 014398 A1 offenbart ein Verfahren zum Herstellen eines Fahrzeug-Verbundbauteils mit einem eine Kernschicht aufweisenden Schichtaufbau in einem Formwerkzeug, wobei die Kernschicht mit Bereichen unterschiedlicher Dicke gebildet wird Einbringen einer mit PU-Harz getränkten ungeformten ersten Faserschicht, Schließen des Formwerkzeugs und Formpressen der mit PU-Harz getränkten ersten Faserschicht gegen die Deckschicht, wodurch unter Wärmezufuhr ein Vorformling mit einer die erste Faserschicht enthaltenden ersten Tragschicht gebildet und ausgehärtet wird, Einbringen einer mit PU-Harz getränkten ungeformten zweiten Faserschicht, Schließen des Formwerkzeugs und Einspritzen von schäumbarem PU zwischen die erste Tragschicht des Vorformlings und die zweite Faserschicht, wobei der die Kernschicht bildende PU-Schaum die zweite Faserschicht gegen die eine profilierte Formoberfläche aufweisende zweite Formgegenplatte presst und daran als eine zweite profilierte Tragschicht ausformt, Öffnen des Formwerkzeugs und Entnehmen des gebildeten Verbundbauteils.

Der Erfindung liegt die Aufgabe zugrunde, ein eingangs genanntes Verfahren anzugeben, das im Hinblick auf die Herstellung eines Fahrzeug-Verbundbauteils, das über seine Flächenausbreitung Bereiche mit sich deutlich unterscheidenden Bauteildicken aufweist, verbessert ist.

Diese Aufgabe wird bei dem eingangs genannten Verfahren durch die nachfolgend genannten Schritte gelöst:
1.1 Einlegen einer insbesondere vorgeformten Deckschicht, die insbesondere eine Außenhaut des Fahrzeug-Verbundbauteils bildet, an eine Formgrundplatte des geöffneten Formwerkzeugs,
1.2 Einbringen einer mit PU-Harz getränkten ungeformten ersten Faserschicht zwischen die Deckschicht und eine erste Formgegenplatte des geöffneten Formwerkzeugs,
1.3 Schließen des Formwerkzeugs und Formpressen der mit PU-Harz getränkten ersten Faserschicht gegen die Deckschicht, wodurch unter Wärmezufuhr ein Vorformling mit einer die erste Faserschicht enthaltenden ersten Tragschicht gebildet und ausgehärtet wird,
1.4 Öffnen des Formwerkzeugs und Ersetzen der ersten Formgegenplatte gegen eine zweite Formgegenplatte mit höhenstrukturierter Formoberfläche,
1.5 Einbringen einer mit PU-Harz getränkten ungeformten zweiten Faserschicht zwischen den an der Formgrundplatte angeordneten Vorformling und der zweiten Formgegenplatte des geöffneten Formwerkzeugs,
1.6 Schließen des Formwerkzeugs und Einspritzen von schäumbarem PU zwischen die erste Tragschicht des Vorformlings und die zweite Faserschicht, wobei der die Kernschicht bildende PU-Schaum die zweite Faserschicht gegen die eine profilierte Formoberfläche aufweisende zweite Formgegenplatte presst und daran als eine zweite profilierte Tragschicht ausformt,
1.7 Öffnen des Formwerkzeugs und Entnehmen des gebildeten Verbundbauteils.

Vorteilhafte Ausgestaltungen der Erfindung sind in den abhängigen Ansprüchen angegeben.

Bei dem erfindungsgemäßen Verfahren ist die Formgrundplatte z. B. an einem Werkzeugunterteil des Formwerkzeugs und die Formgegenplatte an einem Werkzeugoberteil angebracht. Die Öffnungs- und Schließbewegung des Formwerkzeugs erfolgt zweckmäßigerweise durch eine vertikale Bewegung des die Formgegenplatte tragenden Werkzeugoberteils. Jedoch kann das Formwerkzeug beispielsweise auch eine linke Werkzeughälfte und eine rechte Werkzeughälfte aufweisen, die die Formgrundplatte und die Formgegenplatte in horizontaler Öffnungs- und Schließbewegung zueinander bewegen.

Die erste Formgegenplatte weist eine Formoberfläche zum Ausformen der Innen-oder Rückseite des Vorformlings auf. Der Vorformling enthält die erste Tragschicht mit der außenseitigen Deckschicht, z. B. eine thermogeformte Folie, die beispielsweise aus mehreren Kunststoffschichten aufgebaut ist, oder eine lackierbare SMC-Schale.

Die erste Tragschicht wird von einer ersten Faserschicht gebildet, die außerhalb des Formwerkzeugs mittels eines Sprühkopfs oder dergleichen einseitig oder beidseitig mit Polyurethan-Harz besprüht wird. Die erste Faserschicht ist z. B. eine lose Schichtung aus Verstärkungsfasern wie Glasfasern oder eine Fasermatte oder Glasfasermatte als bloße Lage ohne spezielle dreidimensionale Formung, so dass hierdurch keine vorgefertigte Formgestaltung des Verbundbauteils erfolgt. Die auf diese Weise mit PU-Harz getränkte nasse erste ungeformte Faserschicht wird in das geöffnete Formwerkzeug auf die Deckschicht aufgelegt.

Die zweite Formgegenplatte formt die Innenseite des Verbundbauteils. Die zweite Formgegenplatte weist hierfür eine solche höhenstrukturierte und derart dreidimensional geformte Formoberfläche auf, dass mit ihr Bereiche des Verbundbauteils wie z. B. umlaufende erhabene Bauteilrahmen oder Verstärkungsrippen oder dergleichen mit deutlich größerer Bauteildicke gegenüber flächigen Abschnitten des Verbundbauteils, die mit geringerer Dicke gebildet sind, herstellt werden können. Dabei wird an der zweiten Formgegenplatte mittels der zweiten Faserschicht die eine höhenkonturierte Gestalt aufweisende zweite Tragschicht gebildet.

Die zweite Faserschicht ist entsprechend der ersten Faserschicht mit PU-Harz getränkt und wird ungeformt und insbesondere vom PU-Harz noch nass zwischen den an der Formgrundplatte angeordneten Vorformling und der zweiten Formgegenplatte des geöffneten Formwerkzeugs eingebracht.

Wenn im Verfahrensablauf das Formwerkzeug geschlossen wird und schäumbares PU zwischen die erste Tragschicht des Vorformlings und die zweite Faserschicht injiziert wird, wird die noch formbare zweite Faserschicht gegen die höhenprofilierte oder höhenstrukturierte Formoberfläche der zweiten Formgegenplatte gepresst und daran durch den die Kernschicht bildenden PU-Schaum als zweite profilierte Tragschicht ausformt und unter Wärmezufuhr ausgehärtet.

Das erfindungsgemäße Verfahren erfordert somit keine vorgeformte zweite oder innere Faserschicht bzw. keine vorgeformte zweite oder innere Tragschicht, die die Bauteilgestalt des Verbundbauteils vorgeben. Bei dem erfindungsgemäßen Verfahren wird hingegen im Formwerkzeug die Formung der zweiten oder inneren Tragschicht vorgenommen und damit die Bauteilgestalt erzeugt.

Außerdem ist eine weitgehende Designfreiheit bei der Gestalt des Verbundbauteils ein wesentlicher Vorteil, da das dreidimensionale Design des Verbundbauteils nahezu keiner Beschränkung unterliegt. Weiterhin kann die Positionsgenauigkeit beim Verfahrensablauf mit größeren Toleranzen ausgeführt werden, z. B. beim Handling und Positionieren im Formwerkzeug. Die Verfahrensschritte sind gegenüber Verfahren mit vorgeformten Kernen, wie z. B. Waben- oder Schaumstrukturen, deutlich reduziert. Die Interieurfläche weist keine farbliche Abzeichnung oder Unregelmäßigkeiten auf, so dass keine zusätzliche Kaschierung der Innenfläche notwendig ist.

Bei dem Verfahren ist es besonders bevorzugt, wenn die erste Tragschicht und die zweite Tragschicht randseitig miteinander verpresst und mit PU verklebt werden und die Kernschicht umschließen. Damit lässt sich beispielsweise ein fester und steifer Flansch am Rand oder Umfang des Verbundbauteils bilden. Dadurch wird das Verbundbauteil abgedichtet und der schmale Flansch passt sich einer schuppenartigen Anordnung des Verbundbauteils am Fahrzeug an, bildet also einen geometrischen Übergang zu Anbauteilen und schließt mit der Dichtung des Fahrzeuges ab.

Zweckmäßigerweise wird bzw. werden die erste Faserschicht und/oder die zweite Faserschicht außerhalb des Formwerkzeugs durch einseitiges oder beidseitiges Einsprühen mit PU-Harz getränkt.

Gemäß einer bevorzugten Verfahrensgestaltung ist vorgesehen, dass ungeordnete oder geordnete Fasern oder zumindest eine Fasermatte die erste Faserschicht oder Faserlage und/oder die zweite Faserschicht oder Faserlage bilden bzw. bildet und dass die Fasern insbesondere Glasfasern sind. Jedoch können grundsätzlich auch andere Verstärkungsfasern wie Naturfasern oder Carbonfasern verwendet werden.

Weiterhin kann vorgesehen sein, dass ein Abstandshalter auf dem an der Formgrundplatte angeordneten Vorformling aufgebracht wird und anschließend die zweite Faserschicht zwischen dem Abstandshalter und der zweiten Formgegenplatte eingebracht wird. Beim nachfolgenden Schließen des Formwerkzeugs hält der Abstandshalter die zweite Faserschicht beabstandet von dem Vorformling und in Anlage an der zweiten Formgegenplatte. Hierdurch wird der Raum zum Einspritzen von schäumbarem PU-Kunststoff zur Herstellung der Kernschicht des Verbundbauteils bereitgestellt. Der Abstandshalter verbleibt in der Kernschicht bzw. in dem PU-Schaum.

Der Abstandshalter ist beispielsweise eine selbstaufblasbare Folie oder eine dreidimensional verformbare Mattenstruktur, z. B. aus einem Kunststoff wie Polyester. Nachfolgend wird ein erfindungsgemäßes Verfahren zum Herstellen eines Fahrzeug-Verbundbauteils unter Bezugnahme auf die Zeichnung näher erläutert. Es zeigt:
- Fig. 1: in schematischen Darstellungen 1.1 bis 1.9 ein Formwerkzeug in mehreren Stellungen beim Ausführen eines Verfahrens zum Herstellen eines Fahrzeug-Verbundbauteils;
- Fig. 2: in schematischen Darstellungen 2.1 bis 2.9 das Formwerkzeug in mehreren Stellungen beim Ausführen einer Variante des Verfahrens zum Herstellen des Fahrzeug-Verbundbauteils;
- Fig. 3: in schematischen Darstellungen 3.1 bis 3.9 das Formwerkzeug in mehreren Stellungen beim Ausführen einer weiteren Variante des Verfahrens zum Herstellen des Fahrzeug-Verbundbauteils; und
- Fig. 4: in einer Schnittansicht in schematischer Darstellung ein nach dem Verfahren hergestelltes Fahrzeug-Verbundbauteil.

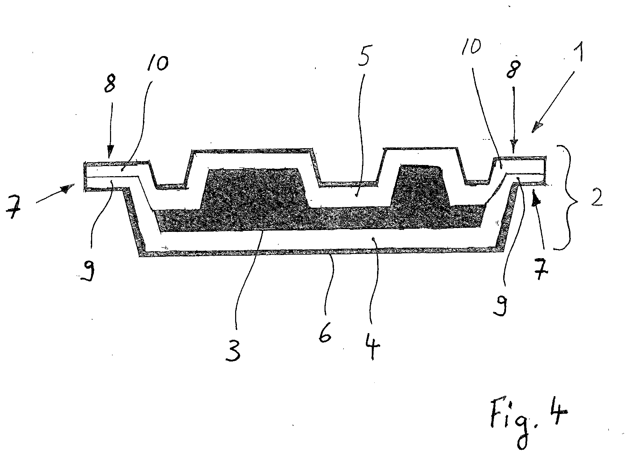

Ein Fahrzeug-Verbundbauteil 1 (siehe Fig. 4), das z. B. ein Fahrzeugaußenflächenbauteil oder einen Deckel eines Dachmoduls bildet, weist einen sandwichartigen Schichtaufbau 2 mit einem Polyurethan-Schaumkern oder PU-Schaumkern als Kernschicht 3 auf. Die Kernschicht 3 ist einerseits von einer ersten Tragschicht 4 und andererseits von einer zweiten Tragschicht 5 abgedeckt. Auf der ersten Tragschicht 4 befindet sich eine äußere Deckschicht 6.

Die erste Tragschicht 4 zusammen mit der Deckschicht 6 und die zweite Tragschicht 5 bilden einen Randbereich 7 des Bauteils 1, der z. B. als insbesondere stegartiger Flansch 8 endet. Am Randbereich 7 und insbesondere am stegartigen Flansch 8 sind ein Randabschnitt 9 der ersten Tragschicht 4 und ein Randabschnitt 10 der zweiten Tragschicht 5 unmittelbar miteinander verbunden. Demnach enthält das Bauteil 1 in seinem Randbereich 7 bzw. im Flansch 8 keine Kernschicht 3.

Die erste Tragschicht 4 und die zweite Tragschicht 5 sind aus Faserlagen oder Faserschichten gebildet, die mit PU-Harz versehen sind. Die Faserlagen sind z. B. aus Glasfasern gebildet und sind insbesondere Glasfasermatten, die durch einseitiges oder zweiseitiges Besprühen mit PU-Harz benetzt oder getränkt worden sind, bevor sie in einem Formwerkzeug unter Druck und Wärmezufuhr als Tragschichten ausgehärtet worden sind.

Die Deckschicht 6 bildet insbesondere eine Außenhaut oder Außenseite des Fahrzeug-Verbundbauteils 1.

Die Kernschicht 3 besteht aus einem PU-Schaum, der in dem Formwerkzeug aus einem eingespritzten PU-Kunststoff geschäumt worden ist.

Nachfolgend wird ein Verfahren zum Herstellen eines erfindungsgemäßen Fahrzeug-Verbundbauteils 1 erläutert.

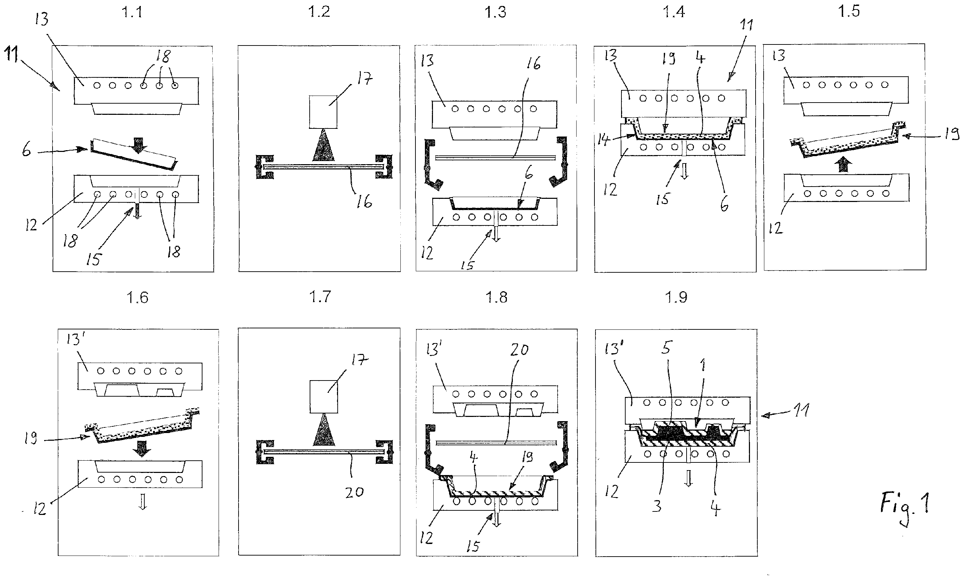

Ein Formwerkzeug 11 (siehe Fig. 1.1) weist eine Formgrundplatte 12 und eine Formgegenplatte 13 auf, die bei geschlossenem Formwerkzeug 11 einen Formhohlraum 14 bilden. Die Formgrundplatte 12 ist z. B. an einer unteren Werkzeughälfte des Formwerkzeugs 11 und die Formgegenplatte 13 an der gegenüberliegenden oberen Werkzeughälfte angebracht.

Die Deckschicht 6 wird bei geöffnetem Formwerkzeug 11 an die Formgrundplatte 12 angelegt bzw. auf die Formgrundplatte 12 aufgelegt. Die Deckschicht 6, die vorzugsweise eine Außenseite oder Außenhaut des insbesondere flächigen Fahrzeug-Verbundbauteils 1 bildet, ist zweckmäßigerweise vorgeformt und an eine formgebende Formoberfläche der Formgrundplatte 12 angepasst. Die Deckschicht 6 ist z. B. eine thermogeformte Folie, die beispielsweise aus mehreren Kunststoffschichten aufgebaut ist, oder eine lackierbare SMC-Schale. Die Formgrundplatte 12 kann eine Unterdruckeinrichtung 15 aufweisen, die z. B. zumindest einen Ansaugkanal enthält, so dass die Deckschicht 6 an der Formgrundplatte 12 durch Unterdruck angesaugt gehalten werden kann.

Außerhalb des Formwerkzeugs 11 (Fig. 1.2) wird eine erste Faserschicht 16 mittels eines Sprühkopfs 17 oder dergleichen einseitig oder beidseitig mit Polyurethan-Harz besprüht. Die erste Faserschicht 16 ist z. B. eine lose Schichtung aus Verstärkungsfasern wie Glasfasern oder eine Fasermatte oder Glasfasermatte als bloße Lage ohne spezielle dreidimensionale Formung, so dass hierdurch keine Formgestaltung des Bauteils erfolgt. Die auf diese Weise mit PU-Harz getränkte erste ungeformte Faserschicht 16 wird in das geöffnete Formwerkzeug 11 eingebracht (Fig. 1.3) und auf die Deckschicht 6 aufgelegt, die an der Formgrundplatte 12 angeordnet ist. Die Formgrundplatte 12 wird mittels einer Heizeinrichtung 18 vorgeheizt, die z. B. in der Formgrundplatte 12 angeordnete Heizkanäle aufweist.

Anschließend wird das Formwerkzeug 11 geschlossen (Fig. 1.4), indem die beiden Werkzeughälften die Formgrundplatte 12 und die Formgegenplatte 13 gegeneinander bewegen. Dabei wird unter Wärmezufuhr die mit PU-Harz getränkte erste Faserschicht 16 gegen die Deckschicht 6 in einen schichtförmigen Verbund formgepresst, der einen Vorformling 19 bildet. Der Vorformling 19 enthält die erste Tragschicht 4, die von der PU-Harz getränkten ersten Faserschicht 16 gebildet ist und unter Wärmezufuhr aushärtet. Das PU-Harz der ersten Faserschicht 16 stellt somit die innige Verbindung mit der Deckschicht 6 her.

Gemäß einer ersten Verfahrensalternative wird der unter Wärmezufuhr und Druck geformte Vorformling 19 nach dem Öffnen des Formwerkzeugs 11 (Fig. 1.5) aus dem Formwerkzeug 11 bzw. von der Formgrundplatte 12 entnommen und in ein Formwerkzeug 11 eingesetzt (Fig. 1.6), das eine gleiche Formgrundplatte 12 aufweist, jedoch anstatt der ersten Formgegenplatte 13, deren Formoberfläche an die Form der Deckschicht 6 angepasst ist, eine zweite Formgegenplatte 13' aufweist, die eine von der ersten Formgegenplatte 13 abweichend geformte Formoberfläche aufweist.

Gemäß einer zweiten Verfahrensalternative verbleibt der geformte Vorformling 19 nach dem Öffnen des Formwerkzeugs 11 an der Formgrundplatte 12 des Formwerkzeugs 11, jedoch wird die obere erste Formgegenplatte 13 durch eine zweite Formgegenplatte 13' mit abweichend geformter Formoberfläche ersetzt.

Die obere zweite Formgegenplatte 13' weist eine Formoberfläche auf, die derart strukturiert gebildet ist, dass der Formhohlraum 14 mehrere Bereiche aufweist, in denen die Abstände zwischen der unteren Formgrundplatte 12 bzw. zwischen der Innenfläche des daran angeordneten Vorformlings 19 und der Formoberfläche der oberen zweiten Formgegenplatte 13' deutlich unterschiedlich sind. Dementsprechend wird das Verbundbauteil 1 mit Bereichen deutlich unterschiedlicher Bauteildicken hergestellt.

Außerhalb des Formwerkzeugs 11 wird eine zweite Faserschicht 20, die in gleicher Weise wie die erste Faserschicht 16 gebildet ist, hergestellt (Fig. 1.7). Die ebenfalls nicht speziell vorgeformte und mit PU-Harz getränkte zweite Faserschicht 20 wird in das geöffnete Formwerkzeug 11 eingebracht (Fig. 1.8) und auf dem Vorformling 19 aufgelegt, wobei ein Randabschnitt der zweiten Faserschicht 20 auf einem Randabschnitt des Vorformlings 19 aufliegt.

Das Formwerkzeug 11 wird geschlossen (Fig. 1.9), wobei die Formgegenplatte 13' und die Formgrundplatte 12 die aufeinanderliegenden Randabschnitte der zweiten Faserschicht 20 und des Vorformlings 19 gegeneinanderpressen. Ein schäumbarer PU-Kunststoff wird zwischen die ausgehärtete erste Tragschicht 4 des Vorformlings 19 und die zweite mit PU getränkte und noch formbare Faserschicht 20 eingespritzt. Durch den Druck beim Einspritzen des PU-Kunststoffes und beim Aufschäumen des PU-Schaumes wird die zweite Faserschicht 20 gegen die eine profilierte Formoberfläche aufweisende zweite Formgegenplatte 13' presst und daran als eine zweite profilierte Tragschicht 5 ausformt. Der PU-Schaum bildet die Kernschicht 3 des Verbundbauteils 1 und ist vollständig von den beiden Tragschichten 4 und 5 umschlossen. Die strukturierte profilierte Formoberfläche der zweiten Formgegenplatte 13' ermöglicht die Herstellung von Verbundbauteilen mit großen Dickenunterschieden unterschiedlicher Bauteilbereiche, wobei die Kernschicht 3 durch das Schäumen die entsprechende Form bildet und dabei keine mechanische Bearbeitung wie Schneiden oder Fräsen des Schaumes erfordert.

Unter Wärmezufuhr wird das Verbundbauteil 1 im geschlossenen Formwerkzeug 11 ausgehärtet. Anschließend wird das Formwerkzeug 11 geöffnet und das gebildete Verbundbauteil 1 wird entnommen.

Der Randbereich 7 des Verbundbauteils 1 endet in dem insbesondere stegartigen Flansch 8 (siehe Fig. 4). Am Randbereich 7 sind der Randabschnitt 9 der ersten Tragschicht 4 und der Randabschnitt 10 der zweiten Tragschicht 5 unmittelbar miteinander verbunden.

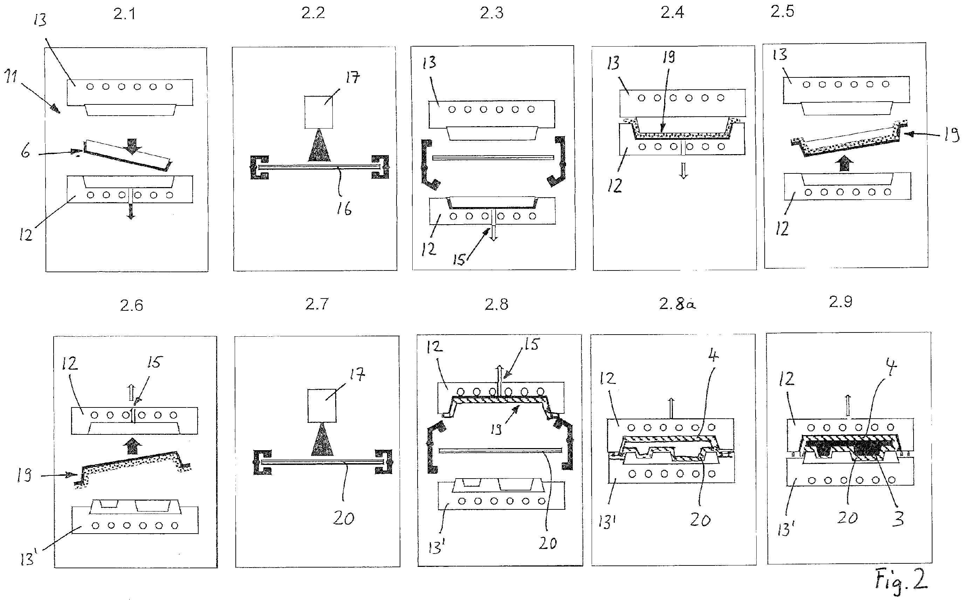

Das voranstehend beschriebene Verfahren kann mit alternativen Verfahrensschritten ausgeführt werden (siehe Fig. 2). Die ersten Verfahrensschritte, dargestellt in den Fig. 2.1 bis 2.5, stimmen mit den voranstehend beschriebenen Verfahrensschritten 1.1 bis 1.5 überein. Anschließend an das Entnehmen des Vorformlings 19 aus dem Formwerkzeug 11 bzw. von der Formgrundplatte 12 (Fig. 2.5) wird das Formwerkzeug 11 derart abgeändert oder gewechselt, dass die zweite Formgegenplatte 13' an der unteren Werkzeughälfte des Formwerkzeugs 11 angeordnet ist und die Formgrundplatte 12 an der oberen Werkzeughälfte angeordnet ist (Fig. 2.6). Der Vorformling 19 wird in das geöffnete Formwerkzeug 11 eingesetzt und an der Formgrundplatte 12 mittels der Unterdruckeinrichtung 15 angesaugt gehalten.

Alternativ hierzu verbleibt der geformte Vorformling 19 im geschlossenen Formwerkzeug 11 oder nach dem Öffnen des Formwerkzeugs 11 an der Formgrundplatte 12 des Formwerkzeugs 11 und wird beim Wenden des Formwerkzeugs 11 weiterhin an der Formgrundplatte 12 gehalten, insbesondere mittels aktiver Unterdruckeinrichtung 15 angesaugt.

Weiterhin wird (siehe Fig. 2.7, entsprechend Fig. 1.7) außerhalb des Formwerkzeugs 11 die zweite getränkte Faserschicht 20 hergestellt und in das geöffnete Formwerkzeug 11 eingebracht (2.8), in dem der Vorformling 19 durch Unterdruck an der an der oberen Werkzeughälfte angeordneten Formgrundplatte 12 gehalten ist. Beim Schließen des Formwerkzeugs 11 (Fig. 2.8a) werden die Randabschnitte des Vorformlings 19 und der zweiten Faserschicht 20 gegeneinandergepresst, während der Vorformling 19 weiterhin mittels Unterdruck an der oben angeordneten Formgrundplatte 12 gehalten wird.

Das Einspritzen des schäumbaren PU-Kunststoffs zwischen die ausgehärtete erste Tragschicht 4 des Vorformlings 19 und die zweite mit PU getränkte und noch formbare Faserschicht 20 (siehe Fig. 2.9) und die Ausformung der Kernschicht 3 erfolgt entsprechend dem anhand der Fig. 1.9 erläuterten Verfahrensschritt des oben beschriebenen Verfahrens.

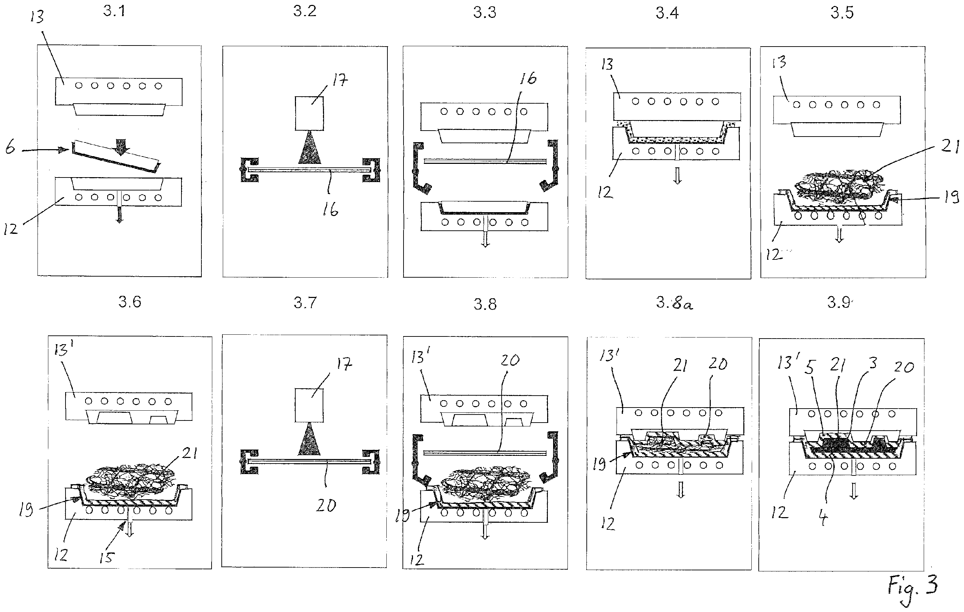

Eine weitere Verfahrensalternative wird anhand der Fig. 3.1 bis 3.9 beschrieben, wobei die Verfahrensschritte 3.1 bis 3.4 mit den anhand der Fig. 1.1 bis 1.4 beschriebenen Verfahrensschritten übereinstimmen. Diese weitere Verfahrensalternative sieht vor, dass bei geöffnetem Formwerkzeug 11 (Fig. 3.5) ein Abstandshalter 21 auf den an der Formgrundplatte 12 gehaltenen Vorformling 19 aufgelegt wird. Die von der oberen Werkzeughälfte getragene Formgegenplatte 13 wird gegen die profilierte Formgegenplatte 13' ausgetauscht (Fig. 3.6).

Die außerhalb des Formwerkzeugs 11 hergestellte und mit PU-Harz besprühte zweite Faserschicht 20 (Fig. 3.7, entsprechend Fig. 1.7) wird in das geöffnete Formwerkzeug 11 eingebracht (Fig. 3.8) und auf dem Abstandshalter 21, der auf dem Vorformling 19 angeordnet ist, aufgelegt. Der Randabschnitt des Vorformlings 19 ist von dem Abstandshalter 21 nicht bedeckt.

Beim Schließen des Formwerkzeugs 11 (Bewegung von Fig. 3.8 nach Fig. 3.8a) hält der Abstandshalter 21 die zweite Faserschicht 20 auf Abstand zu dem Vorformling 19, so dass sich die zweite Faserschicht 20 an die sich in Schließrichtung bewegende profilierte Formgegenplatte 13' anlegt. Zwischen der zweiten Faserschicht 20 und dem Vorformling 19 verbleibt somit ein Abstand oder ein Hohlraum, in dem der Abstandhalter 21 angeordnet ist.

Bei der letzten Schließbewegung des Formwerkzeugs 11 pressen die Formgegenplatte 13' und die Formgrundplatte 12 die aufeinanderliegenden Randabschnitte der zweiten Faserschicht 20 und des Vorformlings 19 gegeneinander. Der schäumbare PU-Kunststoff wird zwischen die ausgehärtete erste Tragschicht 4 des Vorformlings 19 und die zweite mit PU getränkte und noch formbare Faserschicht 20 in den vom Abstandshalter 21 freigehaltenen Abstand oder Hohlraum eingespritzt (Fig. 3.9). Durch den Druck beim Einspritzen des PU-Kunststoffes und beim Aufschäumen des PU-Schaumes wird die zweite Faserschicht 20, die schon teilweise oder gänzlich an der Formgegenplatte 13' anliegt, gegen die profilierte Formoberfläche der zweiten Formgegenplatte 13' gepresst und daran als die zweite profilierte Tragschicht 5 ausgeformt. Der PU-Schaum bildet die Kernschicht 3 des Verbundbauteils 1 und ist vollständig von den beiden Tragschichten 4 und 5 umschlossen.

Der Abstandshalter 21 verbleibt in der Kernschicht 3 des Verbundbauteils 1.

Unter Wärmezufuhr wird das Verbundbauteil 1 im geschlossenen Formwerkzeug 11 ausgehärtet. Anschließend wird das Formwerkzeug 11 geöffnet und das gebildete Verbundbauteil 1 wird entnommen.

Die Formgrundplatte 12 wie auch die Formgegenplatten 13 und 13' können die beschriebene Unterdruckeinrichtung 15 aufweisen, so dass die daran anliegenden Teile wie die Deckschicht 6, der Vorformling 19 und die zweite Faserschicht 20 in den einzelnen Verfahrensschritten bedarfsweise mittels Unterdruck oder Vakuum gehalten werden können.

Der Abstandshalter 21 ist z. B. eine selbstaufblasbare Folie oder eine dreidimensional verformbare Mattenstruktur.

Die selbstaufblasbare Folie hält bei sich schließendem Formwerkzeug die zweite Faserschicht 20 auf Distanz zu dem Vorformling 19 und vorzugsweise auch in Anlage an der Formgegenplatte 13'. Diese wird dann beim Einspritzen des PU-Kunststoffes und beim Aufschäumen des PU-Schaumes durchstochen und verbleibt in der Kernschicht 3 des Verbundbauteils 1.

Die dreidimensional verformbare Mattenstruktur besteht vorzugsweise aus Kunststoffen wie z. B. Polyester mit einer offenporigen Struktur.

**Bezugszeichenliste**

| | | | |
|---|---|---|---|
| 1 | Fahrzeug-Verbundbauteil | 12 | Formgrundplatte |
| 2 | Schichtaufbau | 13 | Formgegenplatte |
| 3 | Kernschicht | 14 | Formhohlraum |
| 4 | erste Tragschicht | 15 | Unterdruckeinrichtung |
| 5 | zweite Tragschicht | 16 | erste Faserschicht |
| 6 | Deckschicht | 17 | Sprühkopf |
| 7 | Randbereich | 18 | Heizeinrichtung |
| 8 | Flansch | 19 | Vorformling |
| 9 | Randabschnitt | 20 | zweite Faserschicht |
| 10 | Randabschnitt | 21 | Abstandshalter |
| 11 | Formwerkzeug | | |

## Patentansprüche

1. Verfahren zum Herstellen eines Fahrzeug-Verbundbauteils (1) mit einem eine Kernschicht (3) aufweisenden Schichtaufbau (2) in einem Formwerkzeug (11), wobei die Kernschicht (3) mit Bereichen unterschiedlicher Dicke gebildet wird, mit den Schritten
1.1 Einlegen einer insbesondere vorgeformten Deckschicht (6), die insbesondere eine Außenhaut des Fahrzeug-Verbundbauteils (1) bildet, an eine Formgrundplatte (12) des geöffneten Formwerkzeugs (11),
1.2 Einbringen einer mit PU-Harz getränkten ungeformten ersten Faserschicht (16) zwischen die Deckschicht (6) und eine erste Formgegenplatte (13) des geöffneten Formwerkzeugs (11),
1.3 Schließen des Formwerkzeugs (11) und Formpressen der mit PU-Harz getränkten ersten Faserschicht (16) gegen die Deckschicht (6), wodurch unter Wärmezufuhr ein Vorformling (19) mit einer die erste Faserschicht (16) enthaltenden ersten Tragschicht (4) gebildet und ausgehärtet wird,
1.4 Öffnen des Formwerkzeugs (11) und Ersetzen der ersten Formgegenplatte (13) gegen eine zweite Formgegenplatte (13') mit höhenstrukturierter Formoberfläche,
1.5 Einbringen einer mit PU-Harz getränkten ungeformten zweiten Faserschicht (20) zwischen den an der Formgrundplatte (12) angeordneten Vorformling (19) und der zweiten Formgegenplatte (13') des geöffneten Formwerkzeugs (11),
1.6 Schließen des Formwerkzeugs (11) und Einspritzen von schäumbarem PU zwischen die erste Tragschicht (4) des Vorformlings (19) und die zweite Faserschicht (20), wobei der die Kernschicht (3) bildende PU-Schaum die zweite Faserschicht (20) gegen die eine profilierte Formoberfläche aufweisende zweite Formgegenplatte (13') presst und daran als eine zweite profilierte Tragschicht (5) ausformt,
1.7 Öffnen des Formwerkzeugs (11) und Entnehmen des gebildeten Verbundbauteils (1).

2. Verfahren nach Anspruch 1,
**dadurch gekennzeichnet, dass** die erste Tragschicht (4) und die zweite Tragschicht (5) randseitig miteinander verpresst und mit PU verklebt werden und die Kernschicht (3) umschließen.

3. Verfahren nach Anspruch 1 oder 2,
**dadurch gekennzeichnet, dass** die erste Faserschicht (16) und/oder die zweite Faserschicht (20) außerhalb des Formwerkzeugs (11) durch einseitiges oder beidseitiges Einsprühen mit PU-Harz getränkt wird bzw. werden.

4. Verfahren nach einem der Ansprüche 1 bis 3,
**dadurch gekennzeichnet, dass** ungeordnete oder geordnete Fasern oder zumindest eine Fasermatte die erste Faserschicht (16) und/oder die zweite Faserschicht (20) bilden bzw. bildet und dass die Fasern insbesondere Glasfasern sind.

5. Verfahren nach einem der Ansprüche 1 bis 4,
**dadurch gekennzeichnet, dass** im Schritt 1.5 zunächst ein Abstandshalter (21) auf dem an der Formgrundplatte (12) angeordneten Vorformling (19) aufgebracht wird und anschließend die zweite Faserschicht (20) zwischen dem Abstandshalter (21) und der zweiten Formgegenplatte (13') eingebracht wird und
dass im Schritt 1.6 der Abstandshalter (21) beim Schließen des Formwerkzeugs (11) die zweite Faserschicht (20) beabstandet von dem Vorformling (19) und in Anlage an der zweiten Formgegenplatte (13') hält.

6. Verfahren nach Anspruch 5,
**dadurch gekennzeichnet, dass** der Abstandshalter (21) eine selbstaufblasbare Folie oder eine dreidimensional verformbare Mattenstruktur ist.

## Claims

1. Method for producing a vehicle composite component (1) with a layer structure (2) having a core layer (3) in a molding tool (11), the core layer (3) being formed with regions of different thickness, having the following steps:
1.1 placing a cover layer (6), in particular a preformed cover layer, which in particular forms an outer skin of the vehicle composite component (1), onto a mold base plate (12) of the open molding tool (11),
1.2 introducing a first fiber layer (16), which is impregnated with PU resin and has not been subjected to forming, between the cover layer (6) and a first mold counterplate (13) of the open molding tool (11),
1.3 closing the molding tool (11) and compression molding the first fiber layer (16), which is impregnated with PU resin, against the cover layer (6), as a result of which a preform (19) with a first support layer (4) containing the first fiber layer (16) is formed and hardened while supplying heat,
1.4 opening the molding tool (11) and replacing the first mold counterplate (13) with a second mold counterplate (13') with a highly structured mold surface,
1.5 introducing a second fiber layer (20), which is impregnated with PU resin and has not been subjected to forming, between the preform (19) arranged on the mold base plate (12) and the second mold counterplate (13') of the open molding tool (11),
1.6 closing the molding tool (11) and injecting foamable PU between the first support layer (4) of the preform (19) and the second fiber layer (20), the PU foam forming the core layer (3) pressing the second fiber layer (20) against the second mold counterplate (13'), which has a profiled mold surface, and shaping it thereon as a second profiled support layer (5),
1.7 opening the molding tool (11) and removing the composite component (1) formed.

2. Method according to Claim 1,
**characterized in that** the first support layer (4) and the second support layer (5) are pressed together at the edge and adhesively bonded with PU and enclose the core layer (3).

3. Method according to Claim 1 or 2,
**characterized in that** the first fiber layer (16) and/or the second fiber layer (20) are/is impregnated outside the molding tool (11) by spraying PU resin on one side or on both sides.

4. Method according to one of Claims 1 to 3,
**characterized in that** unordered or ordered fibers or at least one fiber mat form/forms the first fiber layer (16) and/or the second fiber layer (20), and **in that** the fibers are in particular glass fibers.

5. Method according to one of Claims 1 to 4,
**characterized in that**, in step 1.5, firstly a spacer (21) is applied to the preform (19) arranged on the mold base plate (12) and then the second fiber layer (20) is introduced between the spacer (21) and the second mold counterplate (13') and
**in that**, in step 1.6, when the molding tool (11) is being closed, the spacer (21) keeps the second fiber layer (20) at a distance from the preform (19) and in contact with the second mold counterplate (13').

6. Method according to Claim 5,
**characterized in that** the spacer (21) is a self-inflatable film or a three- dimensionally deformable mat structure.

## Revendications

1. Procédé de fabrication d'un composant composite de véhicule (1) avec une structure de couches (2) présentant une couche de noyau (3) dans un outil de moulage (11), la couche de noyau (3) étant formée avec des zones d'épaisseur différente, comprenant les étapes suivantes :
1.1 l'insertion d'une couche de recouvrement (6) notamment préformée, qui forme notamment une peau extérieure du composant composite de véhicule (1), sur une plaque de base de moulage (12) de l'outil de moulage (11) ouvert,
1.2. l'introduction d'une première couche de fibres (16) non moulée, imprégnée de résine de PU, entre la couche de recouvrement (6) et une première contre-plaque de moulage (13) de l'outil de moulage (11) ouvert,
1.3. la fermeture de l'outil de moulage (11) et le moulage par compression de la première couche de fibres (16) imprégnée de résine de PU contre la couche de recouvrement (6), une préforme (19) avec une première couche de support (4) contenant la première couche de fibres (16) étant ainsi, avec apport de chaleur, formée et durcie,
1.4 l'ouverture de l'outil de moulage (11) et le remplacement de la première contre-plaque de moulage (13) par une deuxième contre-plaque de moulage (13') avec une surface de moulage structurée en hauteur,
1.5 l'introduction d'une deuxième couche de fibres (20) non moulée, imprégnée de résine de PU, entre la préforme (19) agencée sur la plaque de base de moulage (12) et la deuxième contre-plaque de moulage (13') de l'outil de moulage (11) ouvert,
1.6 la fermeture de l'outil de moulage (11) et l'injection de PU moussable entre la première couche de support (4) de la préforme (19) et la deuxième couche de fibres (20), la mousse de PU formant la couche de noyau (3) pressant la deuxième couche de fibres (20) contre la deuxième contre-plaque de moulage (13') présentant une surface de moulage profilée et la formant sur celle-ci sous la forme d'une deuxième couche de support profilée (5),
1.7 l'ouverture de l'outil de moulage (11) et le retrait du composant composite (1) formé.

2. Procédé selon la revendication 1, **caractérisé en ce que** la première couche de support (4) et la deuxième couche de support (5) sont assemblées par pression l'une avec l'autre sur le bord et collées avec du PU et entourent la couche de noyau (3).

3. Procédé selon la revendication 1 ou 2, **caractérisé en ce que** la première couche de fibres (16) et/ou la deuxième couche de fibres (20) est ou sont imprégnée(s) de résine de PU à l'extérieur de l'outil de moulage (11) par pulvérisation d'un côté ou des deux côtés.

4. Procédé selon l'une quelconque des revendications 1 à 3, **caractérisé en ce que** des fibres désordonnées ou ordonnées ou au moins un mat de fibres forment la première couche de fibres (16) et/ou la deuxième couche de fibres (20) et **en ce que** les fibres sont notamment des fibres de verre.

5. Procédé selon l'une quelconque des revendications 1 à 4, **caractérisé en ce qu'**à l'étape 1.5, un écarteur (21) est d'abord appliqué sur la préforme (19) agencée sur la plaque de base de moulage (12), puis la deuxième couche de fibres (20) est introduite entre l'écarteur (21) et la deuxième contre-plaque de moulage (13'), et
**en ce qu'**à l'étape 1.6, l'écarteur (21) maintient la deuxième couche de fibres (20) à l'écart de la préforme (19) et en appui contre la deuxième contre-plaque de moulage (13') lors de la fermeture de l'outil de moulage (11).

6. Procédé selon la revendication 5, **caractérisé en ce que** l'écarteur (21) est une feuille auto-gonflable ou une structure de mat déformable tridimensionnellement.
